# EUROPEAN PATENT APPLICATION

(11) **EP 4 741 350 A1**
(43) Date of publication of application: **13.05.2026**
(21) Application number: 25205698.1
(22) Date of filing: 30.09.2025
(51) Int. Cl.: C01G 53/504, H01M 4/525

(54) **POSITIVE ELECTRODE ACTIVE MATERIAL AND LITHIUM SECONDARY BATTERY INCLUDING THE SAME**

(30) Priority: 25.10.2024 KR 20240147471
(71) Applicant: ECOPRO BM CO., LTD., Cheongju-si, Chungcheongbuk-do 28116 (KR)
(72) Inventor: SON, Yu Jin, 28116 Cheongju-si, Chungcheongbuk-do (KR); PARK, Jung Bae, 28116 Cheongju-si, Chungcheongbuk-do (KR); CHOI, Woo Seok, 28116 Cheongju-si, Chungcheongbuk-do (KR); PARK, Jung Gyu, 28116 Cheongju-si, Chungcheongbuk-do (KR); SHIN, Yo Seop, 28116 Cheongju-si, Chungcheongbuk-do (KR); HEO, Jun Hee, 28116 Cheongju-si, Chungcheongbuk-do (KR); KIM, Seok Jo, 28116 Cheongju-si, Chungcheongbuk-do (KR); HWANG, Do Young, 28116 Cheongju-si, Chungcheongbuk-do (KR); LEE, Sang Don, 28116 Cheongju-si, Chungcheongbuk-do (KR)
(74) Representative: BCKIP Part mbB

(57) **Abstract**

The present invention relates to a positive electrode active material and a lithium secondary battery comprising the same, and more particularly, to a positive electrode active material comprising a mid-Ni type lithium transition metal oxide having a relatively low nickel content, wherein the c-axis length of unit particles constituting the lithium transition metal oxide is increased to enhance the efficiency of reversible intercalation/deintercalation of lithium ions, thereby improving electrochemical characteristics, which are relatively insufficient compared to those of a high-Ni type lithium transition metal oxide having a relatively high nickel content, and to a lithium secondary battery comprising the same.

## Description

### BACKGROUND

### 1. Field of the Invention

The present invention relates to a positive electrode active material and a lithium secondary battery comprising the same, and more particularly, to a positive electrode active material comprising a mid-Ni type lithium transition metal oxide having a relatively low nickel content, wherein the c-axis length of unit particles constituting the lithium transition metal oxide is increased to enhance the efficiency of reversible intercalation/deintercalation of lithium ions, thereby improving electrochemical characteristics, which are relatively insufficient compared to those of a high-Ni type lithium transition metal oxide having a relatively high nickel content, and to a lithium secondary battery comprising the same.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium transition metal oxide is used as a positive electrode active material for a lithium secondary battery, and as an example, composite oxides such as LiCoO₂, LiMn₂O₄, LiNiO₂, LiMnO₂, and the like are being studied.

Among the positive electrode active materials, LiCoO₂ is the most widely used due to its excellent lifetime characteristics and charge/discharge efficiency, but it has limitations in price competitiveness because cobalt, which is used as a raw material, is expensive due to resource constraints.

Lithium manganese oxides such as LiMnO₂ and LiMn₂O₄ have advantages of excellent thermal safety and low price, but also have problems of low capacity and poor high-temperature characteristics. In addition, a LiNiO₂-based positive electrode active material exhibits battery characteristics such as high discharge capacity, but it is difficult to synthesize the LiNiO₂-based positive electrode active material due to cation mixing between Li and transition metals, thereby causing significant problems in rate characteristics.

Therefore, in order to improve the low rate and cycle characteristics of LiNiO₂ while maintaining its high reversible capacity, ternary lithium transition metal oxides such as the so-called NCM (Ni-Co-Mn) and NCA (Ni-Co-Al), in which part of the nickel is substituted with cobalt, manganese, and/or aluminum, or quaternary lithium transition metal oxides such as NCMA (Ni-Co-Mn-Al) have been developed. Since the reversible capacity is reduced as the nickel content in the ternary or quaternary lithium transition metal oxide decreases, research has been widely conducted to increase the nickel content in the lithium transition metal oxide.

However, as the content of nickel in the lithium transition metal oxide increases, cation mixing increases in the crystal structure, thereby reducing stability or increasing the content of unreacted lithium impurities such as LiOH and Li₂CO₃ on the surface.

As the content of lithium impurities remaining on the surface of the lithium transition metal oxide increases, gas generation and swelling may be promoted in a lithium secondary battery using the lithium transition metal oxide as a positive electrode active material. As the content of lithium impurities remaining on the surface of the lithium transition metal oxide increases, a paste composition becomes gel-like due to lithium impurities when a paste for forming a positive electrode active material layer is prepared using the lithium transition metal oxide.

Accordingly, a washing process needs to be performed in the manufacturing process of the positive electrode active material to remove lithium impurities remaining on the surface of the lithium transition metal oxide. However, as the surface of the lithium transition metal oxide is damaged through this washing process, the electrochemical properties and stability of the lithium secondary battery using the lithium transition metal oxide as a positive electrode active material are degraded, and in particular, the problem of premature degradation of lifetime may occur.

In addition, as the demand for lithium secondary batteries has recently grown rapidly and the cost of raw materials has also increased, the lithium secondary battery market has faced a strong demand for cost reduction. In particular, the positive electrode active material accounts for the largest proportion of the material cost in lithium secondary batteries, and the cost of the positive electrode active material inevitably increases as the nickel content, which is an essential element of ternary or quaternary lithium transition metal oxides, increases.

That is, although an increase in the nickel content in the positive electrode active material improves reversible capacity, it also causes problems such as an increase in lithium impurities in the positive electrode active material and a rise in the cost of the positive electrode active material, resulting in a trade-off relationship.

Accordingly, there is a need to develop a mid-Ni type positive electrode active material capable of solving problems such as a decrease in electrochemical characteristics caused by reducing the nickel content in the positive electrode active material, while achieving the goals of improving stability and reducing cost by lowering the nickel content in the positive electrode active material.

### SUMMARY OF THE INVENTION

In the lithium secondary battery market, the growth of lithium secondary batteries for electric vehicles has been playing a leading role, and accordingly, the demand for positive electrode active materials used in lithium secondary batteries has also been continuously increasing.

For example, conventionally, lithium secondary batteries using lithium iron phosphate (LFP) have mainly been used from the perspective of ensuring safety; however, recently, the use of nickel-based lithium transition metal oxides, which have higher energy capacity per weight compared to LFP, has been expanding (although relatively inexpensive LFP is still used to reduce costs in some cases).

In addition, nickel-based lithium transition metal oxides, which are mainly used as positive electrode active materials for high-capacity lithium secondary batteries, typically have a ternary composition such as NCM (Ni-Co-Mn) or NCA (Ni-Co-Al) containing about 70 to 80 mol% or more of nickel, or a quaternary composition such as NCMA (Ni-Co-Mn-Al).

However, as described above, although increasing the nickel content in the lithium transition metal oxide improves reversible capacity, it can also cause problems such as an increase in lithium impurities in the positive electrode active material and deterioration of the stability of the positive electrode active material. Moreover, this inevitably leads to a trade-off problem, such as an increase in the cost of the positive electrode active material.

On the other hand, when the nickel content in the lithium transition metal oxide is reduced to achieve the goal of reducing the cost of the positive electrode active material, problems such as a decrease in electrochemical characteristics, including capacity and rate capability (discharge capacity retention), may occur.

Accordingly, an object of the present invention is to provide a positive electrode active material comprising a mid-Ni type lithium transition metal oxide having a relatively low nickel content (for example, about 70 mol% or less, or about 65 mol% or less), wherein the c-axis length of unit particles constituting the lithium transition metal oxide is increased to enhance the efficiency of reversible intercalation/deintercalation of lithium ions, thereby improving electrochemical characteristics that are relatively insufficient compared to a high-Ni type lithium transition metal oxide having a relatively high nickel content.

Another object of the present invention is to provide a positive electrode active material comprising a mid-Ni type lithium transition metal oxide having a relatively low nickel content (for example, about 70 mol% or less, or about 65 mol% or less), wherein calcium is doped into the lithium transition metal oxide so that the crystallite size falls within a predetermined range, thereby providing a positive electrode active material having improved rate capability in particular.

Still another object of the present invention is to provide a lithium secondary battery comprising the positive electrode active material defined herein.

The objects of the present invention are not limited to those mentioned above, and other objects and advantages of the present invention that are not described can be understood from the following description and will be more clearly understood by the embodiments of the present invention. It will also be readily apparent that the objects and advantages of the present invention can be realized by means and combinations thereof as defined in the claims.

According to one aspect of the present invention, there is provided a positive electrode active material comprising a lithium transition metal oxide capable of intercalation/deintercalation of lithium, wherein the lithium transition metal oxide has at least one form selected from a form of a single particle consisting of a single unit particle and a form of a pseudo-single particle form consisting of 30 or less unit particles aggregated.

The lithium transition metal oxide comprises at least lithium and a transition metal, and a content of nickel among the transition metal may be 40 mol% or more and 70 mol% or less, 45 mol% or more and 70 mol% or less, 50 mol% or more and 70 mol% or less, 55 mol% or more and 65 mol% or less, or 60 mol% or more and 65 mol% or less.

A content of cobalt among the transition metal may be 10 mol% or less, 2.5 mol% or more and 10 mol% or less, or 5 mol% or more and 10 mol% or less. A content of manganese among the transition metal may be 20 mol% or more and 50 mol% or less, 20 mol% or more and 45 mol% or less, 20 mol% or more and 40 mol% or less, 25 mol% or more and 35 mol% or less, or 27 mol% or more and 33 mol% or less.

In addition, the lithium transition metal oxide further comprises cobalt and manganese as transition metals, and a content of manganese in the lithium transition metal oxide may be greater than a content of cobalt.

As defined herein, in a mid-Ni type lithium transition metal oxide having a relatively low nickel content, as the content of manganese becomes higher than the content of cobalt, kinetic properties such as lithium ion conductivity decrease, and there is a tendency for rate capability to deteriorate.

Accordingly, in order to improve the efficiency of reversible intercalation/deintercalation of lithium ions by the lithium transition metal oxide, and to thereby improve electrochemical characteristics that are relatively insufficient compared to a high-Ni type lithium transition metal oxide having a relatively high nickel content, the lithium transition metal oxide is characterized by having at least one form selected from a form of a single particle consisting of a single unit particle and a form of a pseudo-single particle form consisting of 30 or less unit particles aggregated.

An average particle diameter (D₅₀) of the lithium transition metal oxide present in the form of a single particle is 0.5 µm or more and 10.0 µm or less, and an average particle diameter (D₅₀) of the lithium transition metal oxide present in the form of a pseudo-single particle form may be 3.0 µm or more and 15.0 µm or less. The average particle diameter (D₅₀) of the lithium transition metal oxide present in the form of a pseudo-single particle form may vary depending on the number and size of unit particles constituting the pseudo-single particle. In addition, each unit particle constituting the pseudo-single particle may have a size comparable to that of the lithium transition metal oxide present in the form of a single particle. That is, the average particle diameter (D₅₀) of the unit particles constituting the pseudo-single particle may be 0.5 µm or more and 10.0 µm or less.

In addition, in order to improve the efficiency of reversible intercalation/deintercalation of lithium ions by the lithium transition metal oxide, the unit particles constituting the lithium transition metal oxide are characterized by having an increased c-axis length, and accordingly, the crystallite size of the lithium transition metal oxide may be 160 nm to 195 nm, 165 nm to 190 nm, 170 nm to 185 nm, or 175 nm to 182 nm.

A c-axis length obtained from Rietveld analysis of X-ray diffraction of the lithium transition metal oxide may be 14.260 Å or more, 14.260 Å or more and 14.268 Å or less, 14.260 Å or more and 14.266 Å or less, or 14.2601 Å or more and 14.2656 Å or less.

The c-axis length and crystallite size of the lithium transition metal oxide defined herein may be achieved by doping calcium in the lithium transition metal oxide.

The lithium transition metal oxide has a layered crystal structure in which a lithium layer containing lithium and a transition metal layer containing a transition metal are alternately arranged, and calcium may be doped in at least one of the lithium layer and the transition metal layer.

A content of calcium among all elements excluding lithium in the lithium transition metal oxide may be 0.01 mol% or more and 1.0 mol% or less, 0.05 mol% or more and 0.75 mol% or less, 0.1 mol% or more and 0.7 mol% or less, or 0.1 mol% or more and 0.5 mol% or less.

The lithium transition metal oxide may be represented by the following Chemical Formula 1. Similarly, the lithium transition metal oxide present in the form of a single particle, the lithium transition metal oxide present in the form of a pseudo-single particle form, and the unit particles constituting the pseudo-single particle may have a composition represented by Chemical Formula 1 below.

### [Chemical Formula 1]

LiₐNi_{1-(b+c+d+e)}CO_{b}Mn_{c}Ca_{d}M1ₑO₂

Wherein,
in the above Chemical Formula 1,
M1 comprises at least one selected from Na, K, B, Ce, Hf, Ta, Cr, F, Al, V, Ti, Fe, Zr, Zn, Si, Y, Nb, Ga, Sn, Mo, W, P, Ge, Nd, Gd, and Cu, and
0.95 ≤ a ≤ 1.15, 0 ≤ b ≤ 0.10, 0.20 ≤ c ≤ 0.50, 0.0001 ≤ d ≤ 0.01, 0 ≤ e ≤ 0.10, and 0.4 ≤ 1-(b+c+d+e) ≤ 0.7.

In another aspect of the present invention, there is provided a positive electrode comprising the above-described positive electrode active material.

In still another aspect of the present invention, there is provided a lithium secondary battery comprising the above-described positive electrode.

### BRIEF DESCRIPTION OF THE DRAWINGS

FIG. 1 is a surface SEM image of the positive electrode active material according to Example 1.
FIG. 2 is a surface SEM image of the positive electrode active material according to Example 3, and FIG. 3 is a cross-sectional SEM/EDS image of the positive electrode active material according to Example 3.
FIG. 4 is a surface SEM image of the positive electrode active material according to Example 5.
FIG. 5 is a surface SEM image of the positive electrode active material according to Comparative Example 1.
FIG. 6 is a surface SEM image of the positive electrode active material according to Comparative Example 2.
FIG. 7 is a surface SEM image of the positive electrode active material according to Comparative Example 9.

### DETAILED DESCRIPTION OF EXEMPLARY EMBODIMENTS

To better understand the present invention, certain terms are defined herein for convenience. Unless otherwise defined herein, scientific and technical terms used herein will have meanings generally understood by those of ordinary skill in the art. In addition, unless the context clearly indicates otherwise, it should be understood that a term in the singular form also includes its plural form, and a term in the plural form also includes its singular form.

### Positive electrode active material

A positive electrode active material according to one aspect of the present invention comprises a lithium transition metal oxide capable of reversible intercalation/deintercalation of lithium ions.

The lithium transition metal oxide is a composite metal oxide capable of intercalation/deintercalation of lithium ions, and has a layered crystal structure belonging to the R-3m space group. The lithium transition metal oxide having a layered crystal structure exhibits a characteristic peak in a region of 20 of 18° to 20° in a diffraction pattern obtained from XRD analysis.

The lithium transition metal oxide comprises at least lithium and a transition metal. The transition metal may include at least one, at least two, or all of nickel, cobalt, and manganese.

Preferably, the lithium transition metal oxide may be a lithium nickel-based composite oxide containing nickel. In addition, the lithium transition metal oxide may be a lithium nickel-based composite oxide containing nickel and cobalt.

In order to improve low rate characteristics and lifespan characteristics while maintaining the high reversible capacity of LiNiO2, the lithium nickel-based composite oxide may be a ternary lithium transition metal oxide such as NCM (Ni-Co-Mn) or NCA (Ni-Co-Al), in which a portion of nickel is substituted with cobalt, manganese, and/or aluminum, or a quaternary lithium transition metal oxide such as NCMA (Ni-Co-Mn-Al). The ternary or quaternary lithium transition metal oxide may further comprise dopants other than nickel, cobalt, manganese, and aluminum.

The lithium transition metal oxide may be a cobalt-free type lithium transition metal oxide in which the bulk particle does not contain cobalt. The cobalt-free type lithium transition metal oxide may further comprise dopants other than nickel, cobalt, and manganese.

The lithium transition metal oxide defined herein is a mid-Ni type lithium transition metal oxide having a relatively low nickel content. Herein, a lithium transition metal oxide having a nickel content among the transition metal of 70 mol% or less is referred to as a mid-Ni type lithium transition metal oxide, and a lithium transition metal oxide having a nickel content among the transition metal of more than 70 mol% is defined as a high-Ni type lithium transition metal oxide.

The content of nickel among the transition metal (the content of nickel relative to all elements other than lithium in the lithium transition metal oxide) may be 40 mol% or more and 70 mol% or less, 45 mol% or more and 70 mol% or less, 50 mol% or more and 70 mol% or less, 55 mol% or more and 65 mol% or less, or 60 mol% or more and 65 mol% or less.

If the content of nickel in the lithium transition metal oxide exceeds 70 mol%, cation mixing in the crystal structure may increase, thereby reducing stability, or the content of unreacted lithium impurities such as LiOH and Li₂CO₃ on the surface may increase. On the other hand, when the content of nickel in the lithium transition metal oxide is less than 40 mol%, excess amounts of other transition metals (for example, manganese, etc.) other than nickel may cause phase separation, resulting in impurity phases belonging to space groups other than the R-3m space group. The impurity phases may directly affect the deterioration of the electrochemical characteristics of the positive electrode active material.

The content of cobalt among the transition metal may be 10 mol% or less, 2.5 mol% or more and 10 mol% or less, or 5 mol% or more and 10 mol% or less.

If the content of cobalt in the lithium transition metal oxide exceeds 10 mol%, the goal of cost reduction of the positive electrode active material cannot be achieved. In addition, if the content of cobalt in the lithium transition metal oxide becomes excessively high, the operating voltage of a lithium secondary battery using the positive electrode active material may decrease, making it difficult to exhibit high output characteristics at relatively high voltages. Furthermore, if the content of cobalt in the lithium transition metal oxide becomes excessively high, the stability may be degraded due to an increase in the amount of gas generated in the lithium secondary battery using the positive electrode active material.

The content of manganese among the transition metal may be 20 mol% or more and 50 mol% or less, 20 mol% or more and 45 mol% or less, 20 mol% or more and 40 mol% or less, 25 mol% or more and 35 mol% or less, or 27 mol% or more and 33 mol% or less.

If the content of manganese in the lithium transition metal oxide exceeds 50 mol%, it may be difficult to form lithium transition metal oxides in the form of single particles and pseudo-single particles, and excess manganese in the lithium transition metal oxide may cause phase separation, resulting in impurity phases belonging to space groups other than the R-3m space group. The impurity phases may directly affect the deterioration of the electrochemical characteristics of the positive electrode active material.

On the other hand, when the content of manganese in the lithium transition metal oxide is less than 20 mol%, the stability of the lithium transition metal oxide having a relatively low nickel content (for example, about 70 mol% or less, or about 65 mol% or less) as defined herein may decrease, and the operating voltage of a lithium secondary battery using the positive electrode active material may decrease, making it difficult to exhibit high output characteristics at relatively high voltages.

The lithium transition metal oxide further comprises cobalt and manganese as transition metals, and the content of manganese in the lithium transition metal oxide may be greater than the content of cobalt. However, in a conventional mid-Ni type lithium transition metal oxide, as the manganese content becomes higher than the cobalt content, kinetic characteristics such as lithium ion conductivity tend to decrease, resulting in deterioration of rate capability.

Accordingly, herein, in order to improve the efficiency of reversible intercalation/deintercalation of lithium ions by the lithium transition metal oxide and thereby enhance rate capability, the lithium transition metal oxide is characterized by having a small number of unit particles.

Specifically, the lithium transition metal oxide may have at least one form selected from a form of a single particle consisting of a single unit particle and a form of a pseudo-single particle form in which 30 or less unit particles are aggregated. The term "unit particle" is defined as being equivalent to "primary particle."

The single unit particle may have a rod shape, an elliptical shape, and/or an irregular shape. In addition, unless specifically intended during the manufacturing process, variously shaped unit particles may exist within the same positive electrode active material. The term "unit particle" refers to a particle unit in which no apparent grain boundary is observed when observed under a scanning electron microscope (SEM) at a magnification of 5,000× to 20,000×.

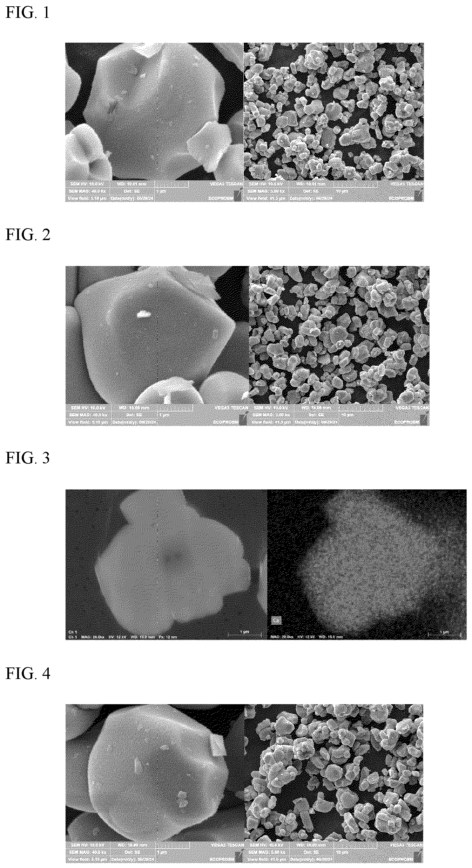

That is, the form of a single particle consisting of a single unit particle means that the lithium transition metal oxide is composed of only one unit particle, not a secondary particle formed by aggregation of multiple unit particles (see high-magnification SEM images of FIGS. 1 and 2). The average particle diameter (D₅₀) of the lithium transition metal oxide present in the form of a single particle may be 0.5 µm to 10.0 µm, 0.5 µm to 8 µm, 0.5 µm to 6 µm, 0.5 µm to 5 µm, 1 µm to 10 µm, 1 µm to 8 µm, 1 µm to 6 µm, 1 µm to 5 µm, 2 µm to 10 µm, 2 µm to 8 µm, 2 µm to 6 µm, or 2 µm to 5 µm.

The average particle diameter (D₅₀) of the unit particle may be the average of the length in the major axis direction and the length in the minor axis direction of the unit particle ([major axis length + minor axis length]/2). The average particle diameter of the unit particle may be calculated as the average value of the particle diameters of all unit particles observed from a surface SEM image and/or a cross-sectional SEM image of the lithium transition metal oxide.

When the average particle diameter of the unit particle is less than 0.5 µm, the specific surface area of the positive electrode active material containing the lithium transition metal oxide, which has at least one form selected from a form of a single particle consisting of a single unit particle and a form of a pseudo-single particle form in which 30 or less unit particles are aggregated, may become large, which can cause deterioration of stability due to side reactions with the electrolyte.

Conversely, when the average particle diameter of the unit particle exceeds 10.0 µm, the growth of the unit particle may be excessively induced, which may reduce the diffusivity of lithium ions mediated by the unit particles. In addition, due to the characteristics of the mid-Ni type lithium transition metal oxide having a relatively high content of transition metals other than nickel, the distribution of transition metals within the unit particle may become non-uniform.

In general, ternary or quaternary lithium transition metal oxides have a secondary particle form in which hundreds or thousands of unit particles are aggregated. The lithium transition metal oxide defined herein may have a secondary particle form in which a plurality of unit particles are aggregated; however, it has a pseudo-single particle form in which 30 or less, 20 or less, or 10 or less unit particles are aggregated.

Hereinafter, in order to distinguish from secondary particles in which hundreds or thousands of unit particles are aggregated, a secondary particle in which 30 or less, 20 or less, or 10 or less unit particles are aggregated may be referred to as a "pseudo-single particle."

In addition, primary particles constituting a ternary or quaternary lithium transition metal oxide having a conventional secondary particle form have a smaller particle diameter than the unit particles defined herein.

The average particle diameter (D₅₀) of the lithium transition metal oxide present in the form of a pseudo-single particle form may be 3.0 µm or more and 15.0 µm or less, 4.0 µm or more and 12.0 µm or less, or 5.0 µm or more and 10.0 µm or less. The average particle diameter (D₅₀) of the lithium transition metal oxide present in the form of a pseudo-single particle form may vary depending on the number and size of unit particles constituting the pseudo-single particle.

In addition, each unit particle constituting the pseudo-single particle may have a size comparable to that of the lithium transition metal oxide present in the form of a single particle. That is, the average particle diameter (D₅₀) of the unit particles constituting the pseudo-single particle may be 0.5 µm or more and 10.0 µm or less, 0.5 µm to 8 µm, 0.5 µm to 6 µm, 0.5 µm to 5 µm, 1 µm to 10 µm, 1 µm to 8 µm, 1 µm to 6 µm, 1 µm to 5 µm, 2 µm to 10 µm, 2 µm to 8 µm, 2 µm to 6 µm, or 2 µm to 5 µm.

The average particle diameter (D₅₀) of the lithium transition metal oxide present in the form of a pseudo-single particle form may be calculated as the average value of the particle diameters of the pseudo-single particles observed in SEM images.

In addition, the particle size distribution of the lithium transition metal oxide in the positive electrode active material may be measured using a laser diffraction method. For example, after dispersing the secondary particles in a dispersion medium, the particles may be introduced into a commercially available laser diffraction particle size analyzer (for example, Microtrac MT 3000), irradiated with ultrasonic waves at about 28 kHz with an output of 60 W, and then a volume cumulative particle size distribution graph may be obtained, wherein the particle size corresponding to 50% of the cumulative volume may be defined as the average particle diameter (D₅₀).

Herein, the term "particle size" is defined as being synonymously with "particle diameter" or "particle size" and, unless otherwise defined, all "average particle sizes" refer to the particle size corresponding to 50% of the cumulative volume determined by the above-described laser diffraction method.

Also, in order to improve the efficiency of reversible intercalation/deintercalation of lithium ions by the lithium transition metal oxide, the unit particles constituting the lithium transition metal oxide are characterized by having an increased c-axis length, and accordingly, the average crystallite size of the lithium transition metal oxide may be 160 nm to 195 nm, 165 nm to 190 nm, 170 nm to 185 nm, or 175 nm to 182 nm.

The average crystallite size may be quantitatively analyzed through X-ray diffraction (XRD) analysis using Cu-Kα X-rays for the lithium transition metal oxide. Specifically, the average crystallite size may be calculated through Rietveld refinement of an X-ray diffraction pattern in a 20 range of 10° to 120°, which is obtained from XRD analysis of the positive electrode active material containing the lithium transition metal oxide.

It is preferable that the average crystallite size of the lithium transition metal oxide is 160 nm to 195 nm. When the average crystallite size is less than 160 nm or greater than 195 nm, the improvement effect on electrochemical characteristics, such as rate capability, of a lithium secondary battery using the lithium transition metal oxide as a positive electrode active material may be insignificant. When the average crystallite size exceeds 195 nm, resistance may increase, causing polarization, and cracks may occur in the particles due to the polarization phenomenon, which ultimately leads to a reduction in the lifespan of the positive electrode active material.

In addition, the c-axis length obtained from Rietveld analysis of X-ray diffraction of the lithium transition metal oxide may be 14.260 Å or more, 14.260 Å or more and 14.268 Å or less, 14.260 Å or more and 14.266 Å or less, or 14.2601 Å or more and 14.2656 Å or less.

The c-axis length and crystallite size of the lithium transition metal oxide defined herein may be achieved by doping calcium into the lithium transition metal oxide. The c-axis length and/or crystallite size of the lithium transition metal oxide defined herein may also be achieved by doping with cations other than calcium; however, such doping may cause problems such as an increase in resistance of the positive electrode active material.

In addition, when doping with cations other than calcium, the c-axis length and crystallite size may not increase simultaneously; one may increase while the other decreases. For example, magnesium doping may not effectively influence either the c-axis length or crystallite size, while strontium doping or barium doping may decrease the c-axis length but excessively increase the crystallite size. In addition, when sodium or potassium doping is applied, the crystallite size may increase while the c-axis length may rather decrease.

The effect of calcium doping may vary depending on the morphology of the lithium transition metal oxide. For example, when the lithium transition metal oxide does not have a single particle form and/or a pseudo-single particle form but has a secondary particle form in which hundreds or thousands of unit particles are aggregated, calcium doping may cause no change or a decrease in crystallite size, while the c-axis length may increase.

The lithium transition metal oxide has a layered crystal structure in which a lithium layer containing lithium and a transition metal layer containing a transition metal are alternately arranged, and calcium may be doped in at least one of the lithium layer and the transition metal layer. As calcium is doped into the crystal structure of the mid-Ni type lithium transition metal oxide, in which the content of nickel among the transition metal is 40 mol% or more and 70 mol% or less, the average crystallite size and c-axis length defined herein may satisfy the defined ranges.

Meanwhile, even if the average crystallite size and c-axis length meet the ranges defined herein, when the composition is not of the mid-Ni type, in which the content of nickel among the transition metal is 40 mol% or more and 70 mol% or less, or when calcium is not doped in the crystal structure of the lithium transition metal oxide, the improvement effect on capacity or rate capability (discharge capacity retention) may be insufficient.

The content of calcium among all elements excluding lithium in the lithium transition metal oxide may be 0.01 mol% or more and 1.0 mol% or less, 0.05 mol% or more and 1.0 mol% or less, 0.1 mol% or more and 1.0 mol% or less, 0.1 mol% or more and 1.0 mol%, 0.05 mol% or more and 0.75 mol% or less, 0.1 mol% or more and 0.7 mol% or less, or 0.1 mol% or more and 0.5 mol% or less.

When the content of calcium among all elements excluding lithium in the lithium transition metal oxide is less than 0.01 mol%, changes in the c-axis length and crystallite size of the lithium transition metal oxide due to calcium doping may be insignificant.

Conversely, when the content of calcium among all elements excluding lithium in the lithium transition metal oxide exceeds 1.0 mol%, changes in the c-axis length and crystallite size of the lithium transition metal oxide may become excessive, causing increased resistance, which can lead to polarization and cracks in the particles due to the polarization phenomenon, ultimately resulting in reduced lifespan of the positive electrode active material. In addition, when the content of calcium among all elements excluding lithium in the lithium transition metal oxide exceeds 1.0 mol%, Ca²⁺ ions that are not doped into the lithium layer and/or the transition metal layer may exist on the surface of the lithium transition metal oxide as a resistive layer, and accordingly, due to changes in the surface kinetic properties (reduced conductivity) of the lithium transition metal oxide, the electrochemical characteristics of the positive electrode active material may deteriorate.

In one embodiment, the lithium transition metal oxide may be represented by the following Chemical Formula 1. Similarly, the lithium transition metal oxide present in the form of a single particle, the lithium transition metal oxide present in the form of a pseudo-single particle form, and the unit particles constituting the pseudo-single particle may have an average composition represented by Chemical Formula 1 below. The average composition of the lithium transition metal oxide may be measured according to a known ICP analysis method.

### [Chemical Formula 1]

LiₐNi_{1-(b+c+d+e)}CO_{b}Mn_{c}Ca_{d}M1ₑO₂

Wherein,
in the above Chemical Formula 1,
M1 comprises at least one selected from Na, K, B, Ce, Hf, Ta, Cr, F, Al, V, Ti, Fe, Zr, Zn, Si, Y, Nb, Ga, Sn, Mo, W, P, Ge, Nd, Gd, and Cu, and
0.95 ≤ a ≤ 1.15, 0 ≤ b ≤ 0.10, 0.20 ≤ c ≤ 0.50, 0.0001 ≤ d ≤ 0.01, 0 ≤ e ≤ 0.10, and 0.4 ≤ 1-(b+c+d+e) ≤ 0.7.

In Chemical Formula 1, "a", representing the ratio of lithium to all elements other than lithium in the lithium transition metal oxide, may be 0.95 or more and 1.15 or less, 0.95 or more and 1.10 or less, 0.98 or more and 1.10 or less, or 1.03 or more and 1.07 or less.

When "a" in Chemical Formula 1 is less than 0.95, the capacity of the positive electrode active material containing the lithium transition metal oxide represented by Chemical Formula 1 may decrease. Conversely, when "a" in Chemical Formula 1 is greater than 1.15, phase separation may occur due to excess lithium and manganese present in the lithium transition metal oxide, resulting in impurity phases belonging to space groups other than the R-3m space group.

In Chemical Formula 1, "1-(b+c+d+e)", representing the ratio of nickel to all elements other than lithium in the lithium transition metal oxide, may be 0.40 or more and 0.70 or less, 0.45 or more and 0.70 or less, 0.50 or more and 0.70 or less, 0.55 or more and 0.65 or less, or 0.60 or more and 0.65 or less.

In Chemical Formula 1, "b", representing the ratio of cobalt to all elements other than lithium in the lithium transition metal oxide, may be 0 or more and 0.10 or less, 0.025 or more and 0.10 or less, or 0.05 or more and 0.10 or less.

In Chemical Formula 1, "c", representing the ratio of manganese to all elements other than lithium in the lithium transition metal oxide, may be 0.20 or more and 0.50 or less, 0.20 or more and 0.45 or less, 0.20 or more and 0.40 or less, 0.25 or more and 0.35 or less, or 0.27 or more and 0.33 or less. When the molar fraction of manganese in the lithium transition metal oxide satisfies the above range, a stable crystal structure can be formed.

In Chemical Formula 1, "d", representing the ratio of calcium to all elements other than lithium in the lithium transition metal oxide, may be 0.0001 or more and 0.01 or less, 0.0005 or more and 0.0075 or less, 0.001 or more and 0.007 or less, or 0.001 or more and 0.005 or less.

In Chemical Formula 1, "M1" refers to dopants other than calcium that are doped into the lithium transition metal oxide. The lithium transition metal oxide has a layered crystal structure in which a lithium layer containing lithium and a transition metal layer containing a transition metal are alternately arranged, and the dopant may be present in a state doped into the crystal lattice of the lithium transition metal oxide (at least one of the lithium layer and/or the transition metal layer).

When the lithium transition metal oxide contains a dopant other than calcium, "e" in Chemical Formula 1 is greater than 0, and when the lithium transition metal oxide does not contain a dopant other than calcium, "e" in Chemical Formula 1 is 0.

In Chemical Formula 1, "e", representing the ratio of the dopant M1 to all elements other than lithium in the lithium transition metal oxide, may be 0.10 or less, 0.05 or less, 0.04 or less, 0.03 or less, 0.02 or less, 0.01 or less, 0.005 or less, 0.004 or less, 0.003 or less, 0.002 or less, or 0.001 or less.

When the lithium transition metal oxide selectively contains a dopant, the dopant may include at least one selected from Na, K, B, Ce, Hf, Ta, Cr, F, Al, V, Ti, Fe, Zr, Zn, Si, Y, Nb, Ga, Sn, Mo, W, P, Ge, Nd, Gd, and Cu, and preferably includes at least one selected from B, Al, Ti, Zr, Mo, W, and P. The type, combination, and content of the dopant may be appropriately selected within a range that does not adversely affect the electrochemical properties and stability of the positive electrode active material.

The upper and lower limits of the contents of nickel, cobalt, manganese, calcium, and dopant M1 defined in Chemical Formula 1 may be appropriately selected within the ranges satisfying the above definitions.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of positive electrode active material

### Example 1

A hydroxide precursor of Ni_{0.62}Co_{0.07}Mn_{0.31}(OH)₂ (Ni:Co:Mn = 62:7:31 (mol%)) was synthesized using nickel sulfate, cobalt sulfate, and manganese sulfate through a known coprecipitation method.

Subsequently, the hydroxide precursor, Ca(OH)₂ (Ca/(Ni+Co+Mn+Ca) mol ratio = 0.001), and LiOH (Li/(Ni+Co+Mn) mol ratio = 1.03) were mixed, and the mixture was calcined under an O₂ atmosphere at 945°C for 10 hours to obtain a positive electrode active material comprising a lithium transition metal oxide doped with calcium.

As confirmed in the surface SEM image of FIG. 1, the positive electrode active material according to Example 1 included a lithium transition metal oxide having at least one form selected from a form of a single particle consisting of a single unit particle and a form of a pseudo-single particle form in which 30 or less unit particles are aggregated.

### Example 2

A positive electrode active material comprising a lithium transition metal oxide doped with calcium was obtained in the same manner as in Example 1, except that the calcination temperature was 935°C.

From the surface SEM image of the positive electrode active material according to Example 2, it was confirmed that the positive electrode active material according to Example 2 included a lithium transition metal oxide having at least one form selected from a form of a single particle consisting of a single unit particle and a form of a pseudo-single particle form in which 30 or less unit particles are aggregated.

### Example 3

A positive electrode active material comprising a lithium transition metal oxide doped with calcium was obtained in the same manner as in Example 1, except that 0.3 mol% of calcium (Ca/(Ni+Co+Mn+Ca) mol ratio = 0.003) was used.

As confirmed in the surface SEM image of FIG. 2, the positive electrode active material according to Example 3 included a lithium transition metal oxide having at least one form selected from a form of a single particle consisting of a single unit particle and a form of a pseudo-single particle form in which 30 or less unit particles are aggregated. In addition, as confirmed in the cross-sectional SEM/EDS image of FIG. 3, calcium doping within the particles was observed.

### Example 4

A positive electrode active material comprising a lithium transition metal oxide doped with calcium was obtained in the same manner as in Example 3, except that the calcination temperature was 935°C.

From the surface SEM image of the positive electrode active material according to Example 4, it was confirmed that the positive electrode active material according to Example 4 included a lithium transition metal oxide having at least one form selected from a form of a single particle consisting of a single unit particle and a form of a pseudo-single particle form in which 30 or less unit particles are aggregated.

### Example 5

A positive electrode active material comprising a lithium transition metal oxide doped with calcium was obtained in the same manner as in Example 1, except that 0.5 mol% of calcium (Ca/(Ni+Co+Mn+Ca) mol ratio = 0.005) was used.

As confirmed in the surface SEM image of FIG. 4, the positive electrode active material according to Example 5 included a lithium transition metal oxide having at least one form selected from a form of a single particle consisting of a single unit particle and a form of a pseudo-single particle form in which 30 or less unit particles are aggregated.

### Comparative Example 1

A hydroxide precursor of Ni_{0.62}Co_{0.07}Mn_{0.31}(OH)₂ (Ni:Co:Mn = 62:7:31 (mol%)) was synthesized using nickel sulfate, cobalt sulfate, and manganese sulfate through a known coprecipitation method. Subsequently, the hydroxide precursor and LiOH (Li/(Ni+Co+Mn) mol ratio = 1.03) were mixed, and the mixture was calcined under an O₂ atmosphere at 945°C for 10 hours to obtain a positive electrode active material comprising a lithium transition metal oxide.

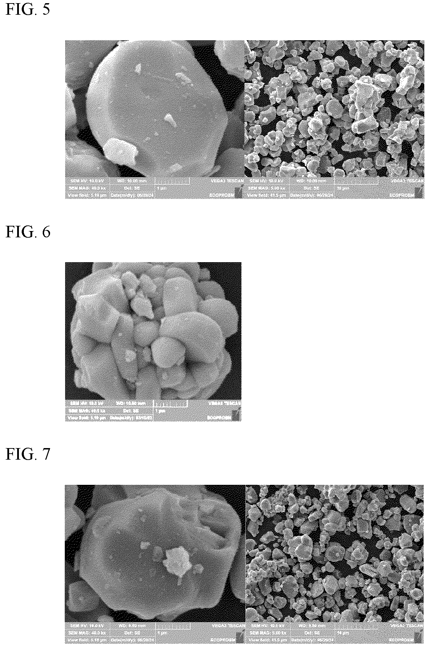

As confirmed in the surface SEM image of FIG. 5, the positive electrode active material according to Comparative Example 1 included a lithium transition metal oxide having at least one form selected from a form of a single particle consisting of a single unit particle and a form of a pseudo-single particle form in which 30 or less unit particles are aggregated.

### Comparative Example 2

A positive electrode active material comprising a lithium transition metal oxide doped with calcium was obtained in the same manner as in Example 3, except that the calcination temperature was 850°C.

As confirmed in the surface SEM image of FIG. 6, the positive electrode active material according to Comparative Example 2 included a lithium transition metal oxide in a form of multi-particle in which more than 30 unit particles were aggregated.

### Comparative Example 3

A positive electrode active material was obtained in the same manner as in Example 1, except that NaOH (Na/(Ni+Co+Mn+Na) mol ratio = 0.001) was used instead of Ca(OH)₂.

The surface SEM image confirmed that the positive electrode active material according to Comparative Example 3 included a lithium transition metal oxide having at least one form selected from a form of a single particle consisting of a single unit particle and a form of a pseudo-single particle form in which 30 or less unit particles are aggregated.

### Comparative Example 4

A positive electrode active material was obtained in the same manner as in Example 3, except that NaOH (Na/(Ni+Co+Mn+Na) mol ratio = 0.003) was used instead of Ca(OH)₂.

The surface SEM image confirmed that the positive electrode active material according to Comparative Example 4 included a lithium transition metal oxide having at least one form selected from a form of a single particle consisting of a single unit particle and a form of a pseudo-single particle form in which 30 or less unit particles are aggregated.

### Comparative Example 5

A positive electrode active material was obtained in the same manner as in Example 5, except that NaOH (Na/(Ni+Co+Mn+Na) mol ratio = 0.005) was used instead of Ca(OH)₂.

The surface SEM image confirmed that the positive electrode active material according to Comparative Example 5 included a lithium transition metal oxide having at least one form selected from a form of a single particle consisting of a single unit particle and a form of a pseudo-single particle form in which 30 or less unit particles are aggregated.

### Comparative Example 6

A positive electrode active material was obtained in the same manner as in Example 5, except that Na₂CO₃ (Na/(Ni+Co+Mn+Na) mol ratio = 0.005) was used instead of Ca(OH)₂.

The SEM image confirmed that the positive electrode active material according to Comparative Example 6 included a lithium transition metal oxide having at least one form selected from a form of a single particle consisting of a single unit particle and a form of a pseudo-single particle form in which 30 or less unit particles are aggregated.

### Comparative Example 7

A positive electrode active material was obtained in the same manner as in Example 3, except that KOH (K/(Ni+Co+Mn+K) mol ratio = 0.003) was used instead of Ca(OH)₂.

The SEM image confirmed that the positive electrode active material according to Comparative Example 7 included a lithium transition metal oxide having at least one form selected from a form of a single particle consisting of a single unit particle and a form of a pseudo-single particle form in which 30 or less unit particles are aggregated.

### Comparative Example 8

A positive electrode active material comprising a lithium transition metal oxide was obtained in the same manner as in Example 5, except that KOH (K/(Ni+Co+Mn+K) mol ratio = 0.005) was used instead of Ca(OH)₂.

The SEM image confirmed that the positive electrode active material according to Comparative Example 8 included a lithium transition metal oxide having at least one form selected from a form of a single particle consisting of a single unit particle and a form of a pseudo-single particle form in which 30 or less unit particles are aggregated.

### Comparative Example 9

A positive electrode active material was obtained in the same manner as in Example 3, except that Mg(OH)₂ (Mg/(Ni+Co+Mn+Mg) mol ratio = 0.003) was used instead of Ca(OH)₂.

As confirmed in the surface SEM image of FIG. 7, the positive electrode active material according to Comparative Example 9 included a lithium transition metal oxide having at least one form selected from a form of a single particle consisting of a single unit particle and a form of a pseudo-single particle form in which 30 or less unit particles are aggregated.

### Comparative Example 10

A positive electrode active material comprising a lithium transition metal oxide was obtained in the same manner as in Comparative Example 1, except that the calcination temperature was 920°C. The SEM image confirmed that the positive electrode active material according to Comparative Example 10 included a lithium transition metal oxide in a form of multi-particle in which more than 30 unit particles were aggregated.

### Comparative Example 11

A positive electrode active material comprising a lithium transition metal oxide doped with calcium was obtained in the same manner as in Example 3, except that the calcination temperature was 920°C.

The SEM image confirmed that the positive electrode active material according to Comparative Example 11 included a lithium transition metal oxide in a form of multi-particle in which more than 30 unit particles were aggregated.

### Comparative Example 12

A positive electrode active material was obtained in the same manner as in Example 3, except that Sr(OH)₂ (Sr/(Ni+Co+Mn+Sr) mol ratio = 0.003) was used instead of Ca(OH)₂.

The SEM image confirmed that the positive electrode active material according to Comparative Example 12 included a lithium transition metal oxide having at least one form selected from a form of a single particle consisting of a single unit particle and a form of a pseudo-single particle form in which 30 or less unit particles are aggregated.

### Comparative Example 13

A positive electrode active material was obtained in the same manner as in Example 3, except that Ba(OH)₂ (Ba/(Ni+Co+Mn+Ba) mol ratio = 0.003) was used instead of Ca(OH)₂.

The SEM image confirmed that the positive electrode active material according to Comparative Example 13 included a lithium transition metal oxide having at least one form selected from a form of a single particle consisting of a single unit particle and a form of a pseudo-single particle form in which 30 or less unit particles are aggregated.

### Preparation Example 2. Manufacture of lithium secondary battery (half-cell)

A positive electrode slurry was prepared by dispersing 94 wt% of each positive electrode active material prepared according to Preparation Example 1, 3 wt% of carbon black, and 3 wt% of PVDF binder in 30 g of N-methyl-2-pyrrolidone (NMP). The positive electrode slurry was uniformly applied onto a 15 µm-thick aluminum thin film and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 µm) as a separator, and an electrolyte in which LiPF₆ was dissolved at a concentration of 1.15 M in a mixed solvent of ethylene carbonate and ethyl methyl carbonate at a volume ratio of 3:7.

### Experimental Example 1. XRD analysis of positive electrode active material

X-ray diffraction (XRD) analysis was performed on each positive electrode active material manufactured according to Preparation Example 1 to calculate the average crystallite size and the c-axis length of the lithium transition metal oxide contained in the positive electrode active material.

The XRD analysis was performed using a Bruker D8 Advance diffractometer with Cu-Kα radiation (1.540598 Å).

The average crystallite size and the c-axis length were calculated from a straight line obtained by plotting θ (rad) of diffraction angles and β (rad) of the full width at half maximum (FWHM) on a coordinate plane with sinθ on the x-axis and βcosθ on the y-axis, based on Rietveld refinement of the diffraction spectrum obtained from the XRD analysis of the positive electrode active material using Cu-Kα radiation in the 2θ range of 10° to 120°.

The XRD analysis results are shown in Table 1 below. In Table 1, the variation of the c-axis represents the degree of increase or decrease in the c-axis length, expressed as a percentage (%), relative to the c-axis length measured from the positive electrode active material of Comparative Example 1, which is used as a reference value.

**[Table 1]**

| Classification | Crystallite size (nm) | c-axis length (Å) | the variation of the c-axis (%) |
|---|---|---|---|
| Example 1 | 175 | 14.2601 | 0.01% |
| Example 2 | 179 | 14.2607 | 0.02% |
| Example 3 | 177 | 14.2635 | 0.04% |
| Example 4 | 182 | 14.2639 | 0.04% |
| Example 5 | 179 | 14.2656 | 0.05% |
| Comparative Example 1 | 156 | 14.2582 | - |
| Comparative Example 2 | 127 | 14.2569 | -0.01% |
| Comparative Example 3 | 224 | 14.2564 | -0.01% |
| Comparative Example 4 | 214 | 14.256 | -0.02% |
| Comparative Example 5 | 239 | 14.2559 | -0.02% |
| Comparative Example 6 | 197 | 14.256 | -0.02% |
| Comparative Example 7 | 215 | 14.2559 | -0.02% |
| Comparative Example 8 | 232 | 14.2552 | -0.02% |
| Comparative Example 9 | 151 | 14.2583 | 0.00% |
| Comparative Example 10 | 144 | 14.2599 | 0.01% |
| Comparative Example 11 | 144 | 14.2681 | 0.07% |
| Comparative Example 12 | 215 | 14.2508 | -0.05% |
| Comparative Example 13 | 214 | 14.2497 | -0.06% |

Referring to the results of Table 1, it was confirmed that the variation in the c-axis length measured from the positive electrode active materials according to Examples 1 to 5 increased by 0.01% to 0.05% compared with Comparative Example 1, which serves as a reference.

In contrast, Comparative Examples 3 to 8, 12, and 13 showed a decrease in c-axis length relative to Comparative Example 1 as reference, and Comparative Example 9 exhibited negligible change in c-axis length. Meanwhile, since the lithium transition metal oxides contained in the positive electrode active materials of Comparative Examples 2, 10, and 11 had a multi-particle form, they could not be directly compared in terms of crystallite-related characteristics with Examples 1 to 5 or with Comparative Example 1 as reference.

### Experimental Example 2. Evaluation of electrochemical properties of lithium secondary battery (half-cell)

For the lithium secondary batterie (half-cell) manufactured in Preparation Example 2, charge/discharge experiments were conducted using an electrochemical analyzer (Toscat-3100 from TOYO SYSTEM CO., LTD.) at 25 °C, a voltage range of 2.0 V to 4.6 V, and a discharge rate of 0.1 C to 2.0 C to measure charging capacity, initial efficiency, and rate capability (C-rate, discharge capacity ratio).

The measurement results are shown in Tables 2 and 3 below.

**[Table 2]**

| Classification | charging capacity (mAh/g) | Initial efficiency (%) | 2.0 C/0.1 C C-rate efficiency (%) |
|---|---|---|---|
| Example 1 | 215.6 | 88.0 | 83.3 |
| Example 2 | 214.1 | 89.1 | 85.0 |
| Example 3 | 215.6 | 87.6 | 83.6 |
| Example 4 | 214.5 | 89.0 | 85.6 |
| Example 5 | 214.6 | 87.6 | 84.1 |
| Comparative Example 1 | 215.9 | 86.1 | 79.9 |
| Comparative Example 3 | 212.9 | 87.7 | 81.7 |
| Comparative Example 4 | 213.1 | 86.6 | 81.0 |
| Comparative Example 5 | 212.9 | 86.6 | 80.6 |
| Comparative Example 6 | 213.4 | 87.6 | 81.5 |
| Comparative Example 7 | 212.2 | 88.2 | 81.8 |
| Comparative Example 8 | 212.6 | 87.8 | 81.2 |
| Comparative Example 9 | 213.6 | 86.3 | 78.8 |
| Comparative Example 12 | 212.3 | 87.6 | 81.5 |
| Comparative Example 13 | 212.2 | 87.2 | 80.8 |

Compared with Comparative Example 1, and Comparative Examples 3 to 9, 12, and 13, which include a positive electrode active material having a lithium transition metal oxide in a form of a single particle and a form of a pseudo-single particle, the use of the positive electrode active materials according to Examples 1 to 5 confirmed an improvement in capacity and/or rate capability (discharge capacity ratio).

Meanwhile, referring to Table 3 below, when compared with Comparative Examples 2, 10, and 11, which include a positive electrode active material having a lithium transition metal oxide in a multi-particle form, the use of the positive electrode active materials according to Examples 1 to 5 confirmed a significant improvement in rate capability.

**[Table 3]**

| Classification | 2.0 C/0.1 C C-rate efficiency (%) |
|---|---|
| Example 1 | 83.3 |
| Example 2 | 85.0 |
| Example 3 | 83.6 |
| Example 4 | 85.6 |
| Example 5 | 84.1 |
| Comparative Example 2 | 77.8 |
| Comparative Example 10 | 79.5 |
| Comparative Example 11 | 79.2 |

According to the present invention, by increasing the c-axis length of unit particles constituting the lithium transition metal oxide, the efficiency of reversible intercalation/deintercalation of lithium ions can be improved, and thereby electrochemical characteristics, particularly capacity or rate capability (discharge capacity retention), that are relatively insufficient compared to a high-Ni type lithium transition metal oxide having a relatively high nickel content, can be enhanced.

In addition, according to the present invention, by doping calcium into the lithium transition metal oxide so that the crystallite size falls within a predetermined range, the rate capability of the positive electrode active material can be particularly improved.

In addition to the above-described effects, specific effects of the present invention are described while explaining specific details for the present invention.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A positive electrode active material comprising a lithium transition metal oxide capable of intercalation/deintercalation of lithium,
wherein the lithium transition metal oxide has at least one form selected from a form of a single particle consisting of a single unit particle and a form of a pseudo-single particle form consisting of 30 or less unit particles aggregated,
wherein the lithium transition metal oxide comprises at least lithium and a transition metal,
wherein a content of nickel among the transition metal is 40 mol% or more and 70 mol% or less,
and wherein an average crystallite size of the lithium transition metal oxide is from 160 nm to 195 nm.

2. The positive electrode active material of claim 1, wherein a content of cobalt among the transition metal is 10 mol% or less.

3. The positive electrode active material of claims 1 or 2, wherein a content of manganese among the transition metal is 20 mol% or more and 50 mol% or less.

4. The positive electrode active material of any one of claims 1 to 3, wherein the lithium transition metal oxide further comprises cobalt and manganese, and wherein a content of manganese among the transition metal is greater than a content of cobalt.

5. The positive electrode active material of any one of claims 1 to 4, wherein an average particle diameter (D₅₀) of the lithium transition metal oxide present in the form of a single particle is from 0.5 µm to 10.0 µm.

6. The positive electrode active material of any one of claims 1 to 5, wherein an average particle diameter (D₅₀) of the lithium transition metal oxide present in the form of a pseudo-single particle form is from 3.0 µm to 15.0 µm.

7. The positive electrode active material of any one of claims 1 to 6, wherein a c-axis length obtained from Rietveld analysis of X-ray diffraction of the lithium transition metal oxide is 14.260 Å or more.

8. The positive electrode active material of any one of claims 1 to 7, wherein the lithium transition metal oxide has a layered crystal structure in which a lithium layer containing lithium and a transition metal layer containing a transition metal are alternately arranged, and calcium is doped in at least one of the lithium layer and the transition metal layer.

9. The positive electrode active material of any one of claims 1 to 8, wherein a content of calcium among all elements excluding lithium in the lithium transition metal oxide is from 0.01 mol% to 1.0 mol%.

10. The positive electrode active material of any one of claims 1 to 9, wherein the lithium transition metal oxide is represented by Chemical Formula 1 below,
[Chemical Formula 1]
LiₐNi_{1-(b+c+d+e)}Co_{b}Mn_{c}Ca_{d}M1ₑO₂
Wherein,
in the above Chemical Formula 1,
M1 comprises at least one selected from Na, K, B, Ce, Hf, Ta, Cr, F, Al, V, Ti, Fe, Zr, Zn, Si, Y, Nb, Ga, Sn, Mo, W, P, Ge, Nd, Gd, and Cu, and
0.95 ≤ a ≤ 1.15, 0 ≤ b ≤ 0.10, 0.20 ≤ c ≤ 0.50, 0.0001 ≤ d ≤ 0.01, 0 ≤ e ≤ 0.10, and 0.4 ≤ 1-(b+c+d+e) ≤ 0.7.

11. A positive electrode comprising the positive electrode active material of any one of claims 1 to 10.

12. A lithium secondary battery comprising the positive electrode of claim 11.
